# FASCICULE DE BREVET EUROPEEN

(11) **EP 2 150 324 B1**
(45) Date de publication et mention de la délivrance du brevet: **12.09.2018**
(21) Numéro de dépôt: 08759694.6
(22) Date de dépôt: 16.05.2008
(51) Int. Cl.: B01D 1/22, B01D 1/26, C02F 1/24, C02F 1/00, C02F 1/56

(54) **INSTALLATION DE TRAITEMENT D'EAU PAR FLOTTATION, ET PROCEDE DE TRAITEMENT D'EAU CORRESPONDANT**
FLOTATIONSWASSERBEHANDLUNGSANLAGE UND ENTSPRECHENDES WASSERBEHANDLUNGSVERFAHREN
FLOTATION WATER TREATMENT PLANT AND CORRESPONDING WATER TREATMENT METHOD

(30) Priorité: 18.05.2007 FR 0703596
(43) Date de publication de la demande: 10.02.2010
(73) Titulaire: Veolia Water Solutions & Technologies Support, 94410 Saint-Maurice (FR)
(72) Inventeur: DUMOULIN, Laurence, F-94220 Charenton Le Pont (FR); PASTORELLI, Delia, F-94120 Fontenay sous Bois (FR); BADARD, Michel, F-92140 Clamart (FR)
(74) Mandataire: Vidon Brevets & Stratégie
(86) Numéro de dépôt international: PCT/EP2008/056057
(87) Numéro de publication internationale: WO 2008/142026

(56) Documents cités:
- EP-A- 0 793 987
- US-A- 3 525 437

## Description

### 1. Domaine

Le domaine de l'invention est celui des installations de clarification pour le traitement des eaux.

Plus précisément, l'invention concerne les installations de clarification d'eau qui utilisent le procédé de la flottation.

### 2. Art antérieur

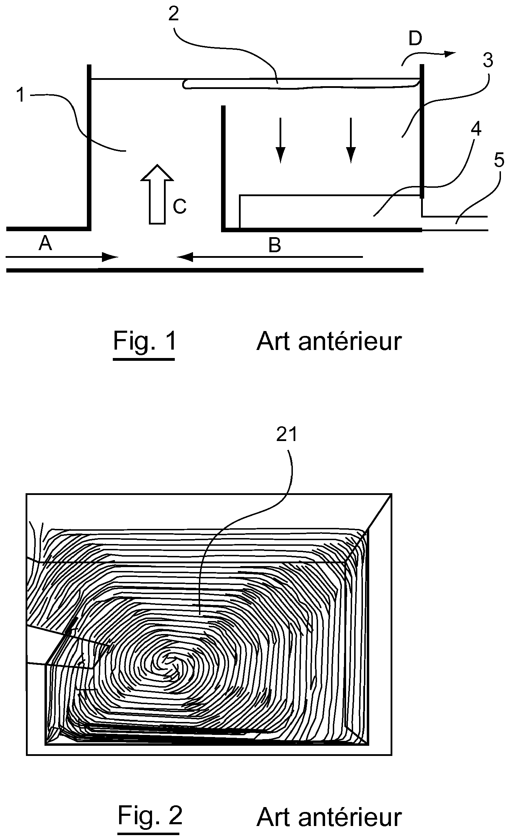

Une installation de clarification d'eau par flottation selon l'art antérieur est illustrée à la figure 1.

Une telle installation de clarification comprend une zone de coagulation et une zone de floculation (non représentées). Dans la zone de coagulation, un ou plusieurs agents coagulants (par exemple du polychlorure d'aluminium, du sulfate d'alumine, du chlorure ferrique...) sont injectés dans l'eau à traiter avant que celle-ci soit dirigée vers la zone de floculation.

La floculation est une étape physico-chimique qui a pour but de modifier l'état des particules colloïdales en suspension dans l'eau de façon que celles-ci coagulent les unes avec les autres.

Tel que cela apparaît sur la figure 1, une telle installation de clarification par flottation comprend une zone de mélange 1 dans la partie inférieure de laquelle sont admises, dans un courant ascendant, l'eau à traiter préalablement coagulée et floculée (flèche A), et une eau pressurisée puis détendue (flèche B) de façon qu'il se forme des micro bulles d'air. Tel que cela est représenté par la flèche C, les bulles d'air ainsi formées permettent de ramener vers la surface de la zone de mélange toutes les particules en suspension dans l'eau à traiter agglomérées aux bulles d'air. Le mélange de particules agglomérées aux bulles d'air forme un lit de bulles 2 qui s'étend à la surface de la zone de mélange 1 et d'une zone de flottation 3.

Ces particules agglomérées aux bulles d'air peuvent ensuite être évacuées (flèche D) en partie supérieure de la zone de flottation 3.

La reprise d'eau clarifiée s'effectue en partie inférieure de la zone de flottation 3 par exemple au moyen de tuyauteries perforées 4 reliées à des canalisations 5, ou à tout autre moyen.

### 3. Inconvénients de l'art antérieur

Un inconvénient de cette technique de l'art antérieur est lié à la conception de la zone de mélange. En effet, celle-ci ne permet pas une mise en contact homogène de l'eau à traiter, préalablement coagulée et floculée, et de l'eau pressurisée puis détendue sur toute la section horizontale de la zone de mélange. Ce défaut de contact homogène est observé quelles que soient la valeur du débit de l'eau à traiter, la qualité de l'eau à traiter, et la valeur du débit de l'eau pressurisée puis détendue.

Un tel défaut de contact homogène conduit généralement à perturber le phénomène d'agglomération des particules en suspension dans l'eau à traiter avec les micro bulles d'air, ce qui tend à diminuer l'efficacité du traitement de l'eau.

Un autre inconvénient de cette technique de l'art antérieur est lié à la conception de la zone de flottation. En effet, les matières en suspension agglomérées aux bulles d'air sont entraînées par un phénomène de boucle de recirculation, jusqu'à la zone de reprise d'eau clarifiée.

Un tel phénomène peut donc engendrer le départ de matières en suspension agglomérées aux micro bulles dans le flux d'eau clarifiée. En conséquence, l'eau clarifiée recueillie contient des impuretés et l'efficacité du dispositif est donc affectée.

En outre, le lit de matières en suspension agglomérées aux bulles d'air, qui se forme à la surface de la zone de flottation, peut atteindre une hauteur avoisinant la hauteur de la zone de flottation, ce qui, associé au phénomène de recircultation, favorise le départ d'impuretés vers la zone de reprise d'eau clarifiée.

Ce phénomène de recirculation est illustré par la figure 2 sur laquelle sont représentés les vecteurs vitesse 21 du flux de l'eau contenue dans la zone de flottation. On observe sur cette figure 2 que l'eau clarifiée a tendance à remonter vers le haut de la zone de flottation où se trouve le lit de bulles d'air. L'eau clarifiée se mélange alors aux micro bulles d'air chargées de particules initialement en suspension dans l'eau à traiter avant d'être redirigée vers le bas de la zone de flottation.

### 4. Objectifs de l'invention

L'invention a notamment pour objectif de pallier ces inconvénients de l'art antérieur.

Plus précisément, un objectif de l'invention est de fournir une technique de traitement d'eau qui permette d'optimiser la clarification d'eau par flottation.

Un autre objectif de l'invention est de fournir une technique de clarification d'eau par flottation qui permette d'obtenir un mélange homogène de l'eau à traiter et de l'eau pressurisée puis détendue.

L'invention a encore pour objectif de mettre en oeuvre une telle technique qui permette de prévenir l'apparition de phénomène de recirculation dans la zone de reprise d'eau clarifiée.

Un autre objectif de l'invention est de fournir une telle technique qui soit fiable, simple et peu coûteuse à mettre en oeuvre.

### 5. Exposé de l'invention

L'invention concerne une installation de traitement d'eau par flottation comprenant au moins :
- une zone d'arrivée d'eau à traiter préalablement coagulée et floculée ;
- une zone de mélange d'une eau pressurisée puis détendue avec ladite eau à traiter ;
- une zone de flottation séparée de ladite zone de mélange par une paroi ;
- une zone de reprise d'eau clarifiée prévue dans la partie inférieure de ladite zone de flottation.

Selon l'invention , ladite zone de mélange accueille au moins une buse de diffusion de ladite eau pressurisée, ladite buse de diffusion s'étendant au voisinage d'un panneau, dont au moins une partie présente des perforations, et qui sépare ladite zone d'arrivée et ladite zone de mélange.

Ainsi, l'invention consiste à interposer un panneau perforé entre la zone d'arrivée de l'eau à traiter et la zone de mélange. Le passage de l'eau à traiter à travers le panneau perforé permet d'homogénéiser et de fragmenter l'écoulement de l'eau à traiter. Ceci contribue à ce que la mise en contact entre l'eau à traiter et les micro bulles d'air formées dans la zone de mélange par l'introduction d'eau pressurisée puis détendue soit homogène sur toute la section horizontale de la zone de mélange, ce qui permet d'améliorer l'agglomération des particules en suspension dans l'eau à traiter avec les micro bulles d'air.

L'invention permet, par ailleurs, de neutraliser les courts-circuits hydrauliques, synonymes de perte d'efficacité par défaut de contact entre particules en suspension et bulles d'air.

La mise en oeuvre d'un tel panneau perforé selon l'invention permet donc d'optimiser le traitement de l'eau par flottation et d'améliorer en conséquence la qualité de l'eau clarifiée recueillie à la fin du traitement.

Selon une caractéristique avantageuse, ledit panneau s'étend sensiblement horizontalement.

Dans ce cas, le flux d'eau à traiter est essentiellement ascendant à l'aval du panneau. Si les flocs formés au cours de la coagulation/floculation sont résistants, l'eau pressurisée est préférentiellement diffusée à contre courant de l'eau à traiter. Les buses de diffusion s'étendent alors essentiellement à la verticale de façon que l'eau pressurisée soit diffusée selon un courant initialement descendant.

Si les flocs formés sont fragiles, les buses sont placées de façon que l'eau pressurisée soit diffusée à co-courant de l'eau à traiter, c'est-à-dire de façon que l'eau pressurisée soit diffusée selon un courant initialement ascendant.

Selon une autre caractéristique avantageuse, ledit panneau s'étend sensiblement verticalement.

Dans ce cas, les buses de diffusion s'étendent essentiellement à l'horizontal de façon que l'eau pressurisée soit diffusée selon un courant initialement horizontal. Seul le sens de la diffusion diffère (co-courant ou contre courant) selon que les flocs sont fragiles ou résistants.

Dans d'autres variantes avantageuses, il pourra être prévu que le panneau soit incliné.

Selon un mode de réalisation préférentiel, une installation de traitement d'eau selon l'invention comprend une plaque formant brise jet sensiblement parallèle audit panneau qui s'étend entre ledit panneau et ladite buse et dont au moins une partie présente des premiers trous.

La mise en oeuvre d'une telle plaque formant brise jet permet d'améliorer la fragmentation du flux d'eau à traiter et ainsi d'homogénéiser le contact entre les micro bulles d'air et l'eau à traiter dans la zone de mélange.

Préférentiellement, lesdits premiers trous de ladite plaque s'étendent dans le prolongement de parties pleines dudit panneau.

Ceci permet la création de chicanes devant être traversées par l'eau à traiter avant son arrivée dans la zone de mélange. La présence de ces chicanes permet également d'améliorer la fragmentation du flux d'eau à traiter.

Avantageusement, ladite plaque présente des seconds trous qui s'étendent au-dessus desdites perforations dudit panneau.

Ces deuxièmes trous, encore appelés trous ou perçages d'affinage, permettent d'optimiser l'homogénéisation du flux d'eau à traiter.

Selon un aspect préféré de la technique présentée ici, chacune desdites buses de diffusion est placée essentiellement dans l'axe d'une desdites perforations dudit panneau.

Ceci permet d'assurer un mélange optimal entre les flux d'eau à traiter et d'eau pressurisée. Toutefois, selon une variante dans laquelle les perforations du panneau présentent une taille relativement faible, la correspondance entre chaque buse de diffusion et une perforation du panneau n'est pas nécessaire pour obtenir un mélange satisfaisant.

Avantageusement, une installation de traitement d'eau selon l'invention comprend un premier et un deuxième réseau de distribution de ladite eau pressurisée respectivement selon deux valeurs de débit de distribution différentes.

Cette approche peut permettre de diffuser de l'eau pressurisée selon un débit Q1 délivré par le premier réseau, selon un débit Q2 délivré par le deuxième réseau, et selon un débit Q3 égal à la somme des débits Q1 et Q2 lorsque les deux réseaux sont activés simultanément. Le débit peut être choisi par exemple en fonction du débit d'eau à traiter et/ou en fonction de sa qualité. Selon une caractéristique avantageuse, ladite buse est reliée auxdits premier et deuxième réseaux de distribution.

De telles buses, encore appelées buses doubles, du fait qu'elles sont reliées directement aux deux réseaux, peuvent tout aussi bien être utilisées lorsque la plaque formant brise jet et ou non mise en oeuvre. Leur utilisation est cependant recommandée lorsque la plaque formant brise jet n'est pas mise en oeuvre et que chacune des buses s'étend dans l'axe des perforations du panneau.

Selon une variante, lesdites buses appartiennent avantageusement à deux catégories de buses, une première catégorie de buses étant reliée audit premier réseau et une deuxième catégorie de buses étant reliée audit deuxième réseau.

De telles buses de diffusion peuvent être utilisées préférentiellement lorsque la plaque formant brise jet est mise en oeuvre, ou lorsque les perforations du panneau présentent un diamètre de petite taille, avantageusement compris entre deux et trente centimètres.

Selon une caractéristique avantageuse, ladite ou lesdites buses comprennent deux plaques perforées disposées en regard l'une de l'autre.

Ces buses comprennent donc deux parois perforées, appelées également parois de détente, qui permettent respectivement de faire subir à l'eau pressurisée une première détente forte puis une deuxième détente faible permettant la diffusion de l'eau accompagnée de micro bulles d'air. La diffusion permet en outre d'éviter de forts gradients de vitesse au niveau de l'étage de diffusion.

Selon une caractéristique préférée, lesdites buses présentent un contour inférieur divergent.

La mise en oeuvre d'un contour inférieur divergent peut notamment permettre de fiabiliser le phénomène de diffusion.

Avantageusement, ledit contour divergent est plan et forme un angle y avec la verticale compris entre 0 et 20°.

Préférentiellement, ledit contour divergent est incurvé.

Selon un aspect préféré de l'invention , la partie supérieure de ladite paroi séparant ladite zone de mélange de ladite zone de flottation présente une portion inclinée selon un angle α en direction de ladite zone de flottation.

Dans ce cas, la valeur dudit angle α est avantageusement comprise entre 120° et 175°.

Selon un autre aspect avantageux, ladite paroi séparant ladite zone de mélange de ladite zone de flottation présente une portion supérieure incurvée en direction de ladite zone de flottation.

Dans ce cas, ladite portion incurvée présente préférentiellement un rayon compris entre 0,1 et 1 mètre.

La mise en oeuvre de telles portions inclinées ou incurvées peut notamment permettre de faciliter le passage de l'eau depuis la zone de mélange vers la zone de flottation.

Avantageusement, ladite zone de flottation accueille une pluralité de cloisons s'étendant essentiellement verticalement au-dessus de ladite zone de reprise.

La mise en oeuvre de telles cloisons permet de fragmenter l'eau clarifiée qui s'écoule vers le bas de la zone de flottation et ainsi d'éviter l'apparition de phénomène de boucle de recirculation. Ceci contribue à éviter que l'eau clarifiée se mélange avec le lit de bulles d'air sur lesquelles sont agglomérées des particules initialement contenues dans l'eau à traiter.

Préférentiellement, au moins une desdites cloisons présente au moins une partie supérieure inclinée selon un angle β ou incurvée.

Préférentiellement l'angle β à une valeur comprise entre 120° et 240°.

Ces portions inclinées ou incurvées peuvent permettre d'améliorer la cassure de recirculation dans la zone de reprise d'eau clarifiée.

Avantageusement, lesdites cloisons ont une hauteur comprise entre 30 et 300 centimètres. Selon un autre aspect préféré de l'invention , lesdites cloisons sont plus rapprochées les unes des autres à proximité de ladite paroi séparant ladite zone de mélange de ladite zone de flottation.

Ceci peut notamment contribuer à éviter la formation de rotations induites du flux entre deux plaques.

De façon préférée, lesdites cloisons sont séparées d'une distance comprise entre 20 et 300 centimètres.

Préférentiellement, ladite zone de reprise accueille des moyens de reprise d'eau clarifiée reliés à des moyens de recueil d'eau clarifiée.

Selon un aspect avantageux, une installation de traitement d'eau selon l'invention comprend des moyens de production de ladite eau pressurisée.

Préférentiellement, lesdits moyens de production sont reliés auxdits moyens de reprise d'eau clarifiée et à une source de production d'air.

L'eau pressurisée peut ainsi être formée à partir de l'eau clarifiée disponible à la sortie de l'installation selon la technique présentée ici. Dans une variante, l'eau pressurisée peut aussi être formée à partir d'eau à traiter de préférence non coagulée et non floculée.

Avantageusement, une installation de traitement d'eau selon l'invention comprend des moyens de raclage susceptibles d'être déplacés en regard de la partie supérieure de ladite zone de flottation.

Ceux-ci permettent d'évacuer les lits de bulles d'air de façon simple et efficace.

L'invention concerne également un procédé de traitement d'eau par flottation qui consiste à faire transiter l'eau dans une installation selon la technique présentée ici, et à admettre dans ladite zone de mélange un courant ascendant de ladite eau à traiter à travers ledit panneau perforé, et un courant de ladite eau pressurisée au moyen de ladite ou desdites buses de diffusion de façon à former des bulles d'air susceptibles de ramener des particules en suspension dans ladite eau à traiter vers la surface de ladite zone de mélange.

Selon un aspect préféré, ledit courant de ladite eau pressurisée est initialement ascendant.

Selon un autre aspect préféré, ledit courant de ladite eau pressurisée est initialement descendant.

Selon encore un autre aspect préféré de la technique présentée ici, ledit courant de ladite eau pressurisée est initialement horizontal.

En effet, suivant la qualité de l'eau à traiter, des flocs plus au moins résistants peuvent être formés au cours de la coagulation-floculation. Le mode d'installation de la buse dépend de la résistance des flocs. Si le floc est fragile, le co-courant est privilégié de façon à créer un gradient de vitesse nécessaire suffisant. Dans le cas où la coagulation-floculation forme des flocs très résistants, le contre-courant est privilégié.

Ainsi, suivant que le panneau s'étend sensiblement de façon horizontale ou de façon verticale, et que les flocs sont fragiles ou résistants, les buses peuvent être positionnées de façon que l'eau pressurisée soit diffusée à co-courant ou à contre courant de l'eau à traiter.

Dans une autre variante, les buses peuvent également être installées essentiellement horizontalement lorsque le panneau s'étend essentiellement horizontalement.

Avantageusement, un procédé de traitement d'eau par flottation selon l'invention comprend une étape de choix d'une desdites valeurs dudit débit de distribution de ladite eau pressurisée en fonction du débit de ladite eau à traiter et/ou de la qualité de ladite eau à traiter.

Un procédé selon l'invention est donc modulable du fait qu'il peut être adapté à un grand nombre de situations.

Selon un autre aspect avantageux, un procédé de traitement d'eau par flottation selon l'invention consiste à mettre en oeuvre lesdits moyens de raclage afin d'évacuer en dehors de ladite zone de flottation lesdites particules agglomérées auxdites bulles d'air.

### 6. Liste des figures

D'autres caractéristiques et avantages de l'invention apparaîtront plus clairement à la lecture de la description suivante de modes de réalisation préférentiels, donnés à titre de simples exemples illustratifs et non limitatifs, et des dessins annexés, parmi lesquels :
- la figure 1 présente une installation de traitement d'eau par flottation selon l'art antérieur ;
- la figure 2 illustre les vecteurs vitesse du flux de liquide à l'intérieur de l'installation illustrée à la figure 1 ;
- la figure 3 présente un premier mode de réalisation d'une installation de traitement d'eau selon la technique présentée ici, dans laquelle un panneau perforé sépare la zone d'arrivée d'eau à traiter de la zone de mélange ;
- la figure 4 illustre une vue partielle d'une variante de l'installation de la figure 3 dans laquelle plusieurs buses de diffusion sont mises en oeuvre sans correspondance avec les perforations du panneau perforé ;
- la figure 5 est une vue schématique d'une buse de diffusion susceptible d'être reliée à deux réseaux de diffusion d'eau pressurisée selon des débits différents ;

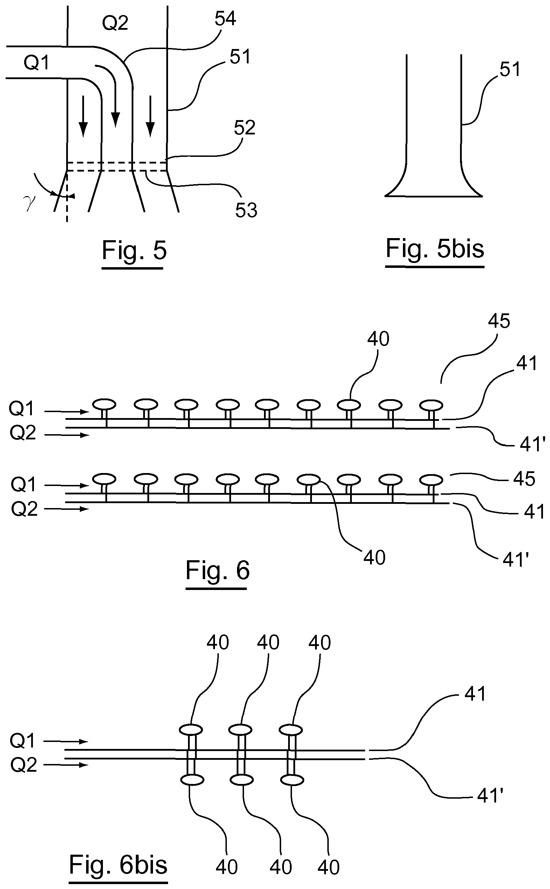

- la figure 5 bis illustre une variante du contour inférieur que peut présenter une buse illustrée à la figure 5 ;
- les figures 6 et 6 bis représentent deux architectures d'un réseau de distribution d'eau pressurisée mettant en oeuvre des buses telles qu'illustrées à la figure 5 ;

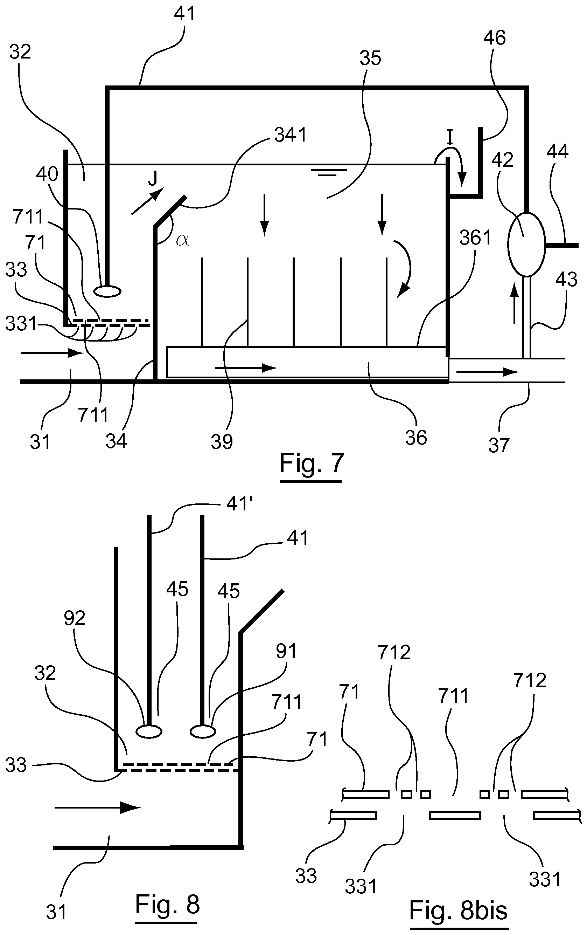

- la figure 7 illustre un deuxième mode de réalisation d'une installation de traitement d'eau selon l'invention qui comprend une plaque trouée interposée entre les buses de diffusion et le panneau perforé ;
- la figure 8 est une vue partielle d'une variante de l'installation de la figure 7, dans laquelle plusieurs rangées de buses sont mises en oeuvre ;
- la figure 8 bis illustre une autre variante d'une plaque formant brise jet ;

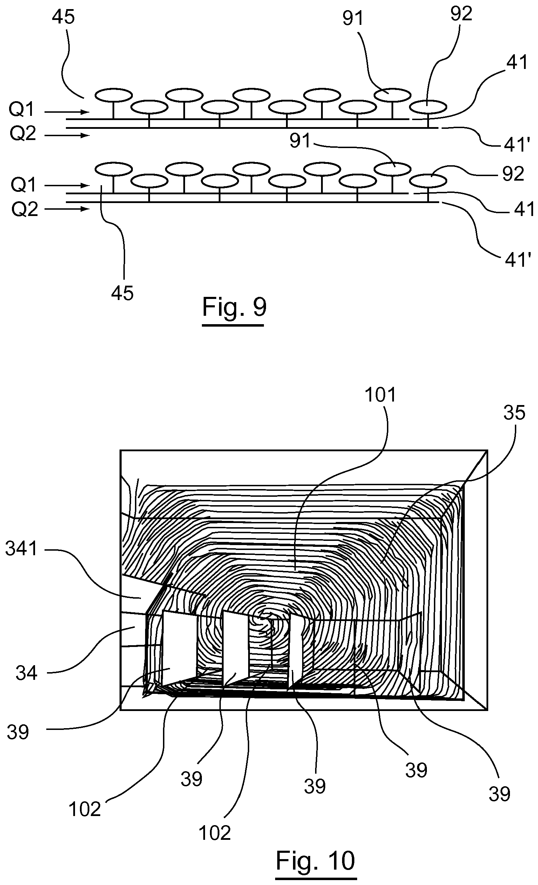

- la figure 9 illustre un exemple d'une architecture de réseau de distribution d'eau pressurisée dans laquelle des buses d'une première catégorie sont reliées à un réseau de diffusion d'eau pressurisée selon un premier débit et des buses d'une deuxième catégorie sont reliées à un réseau de diffusion selon un deuxième débit d'eau pressurisée ;
- la figure 10 illustre les vecteurs vitesse du flux de liquide à l'intérieur d'une installation selon la technique présentée ici.

### 7. Description de modes de réalisation de la technique présentée ici

### 7.1. Bref rappel du principe de la technique présentée ici

Le principe général de l'invention repose sur la mise en oeuvre d'une installation de clarification d'eau par flottation, qui comprend un panneau perforé qui sépare une zone d'arrivée d'une eau à traiter préalablement coagulée et floculée d'une zone de mélange de l'eau à traiter avec une eau pressurisée puis détendue, la zone de mélange contenant une ou plusieurs buses de diffusion de l'eau pressurisée.

La présence du panneau perforé permet d'homogénéiser et de fragmenter l'écoulement dans la zone de mélange de l'eau à traiter. Cette fragmentation permet d'homogénéiser le contact entre l'eau à traiter et les micro bulles d'air formées dans la zone de mélange sur toute la section horizontale de la zone de mélange. La mise en oeuvre d'un tel panneau perforé permet ainsi d'optimiser la clarification de l'eau par flottation.

En outre, l'installation selon l'invention comprend également une zone de flottation accueillant des cloisons espacées les unes des autres et qui s'étendent essentiellement verticalement et parallèlement les unes par rapport aux autres.

La mise en oeuvre de telles cloisons à l'intérieur de la zone de flottation permet de rompre les lignes de flux de liquide s'écoulant dans la zone de flottation. Ceci permet de prévenir le phénomène de recirculation notamment dans la partie inférieure de la zone de flottation, c'est-à-dire que de l'eau clarifiée retourne en contact du lit de bulles à la surface de la zone de flottation. L'entraînement de particules en suspension agglomérées aux bulles d'air dans la zone de reprise d'eau clarifiée peut ainsi être évité, ou à tout le moins limité.

La mise en oeuvre de telles cloisons contribue ainsi à éviter que des bulles d'air ne soient évacuées avec l'eau clarifiée recueillie, et à améliorer en conséquence la qualité de l'eau clarifiée récoltée.

### 7.2. Exemple d'un premier mode de réalisation d'une installation de traitement d'eau selon la technique présentée ici

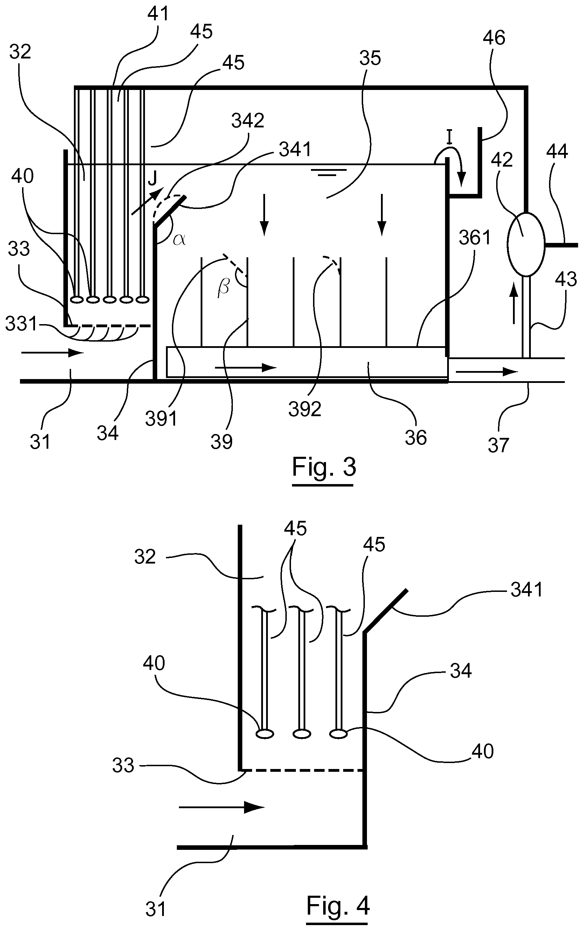

En référence à la figure 3, un mode de réalisation d'un exemple d'une installation de traitement d'eau par flottation selon l'invention est décrit.

Une telle installation comprend une zone d'arrivée 31 d'une eau à traiter. L'eau à traiter est préalablement coagulée et floculée. À cet effet, une zone de coagulation et une zone de floculation sont disposées en série (non représentées) en amont de la zone d'arrivée 31.

Une zone de mélange 32 s'étend au-dessus de la zone d'arrivée d'eau 31. Les zones d'arrivée d'eau 31 et de mélange 32 sont séparées l'une de l'autre par un panneau 33 dont au moins une partie présente des perforations 331. Préférentiellement, les perforations 331 s'étendent sur toute la surface du panneau perforé 33. Les perforations 331 ménagées dans le panneau 33 peuvent par exemple présenter un contour circulaire de l'ordre de 15 centimètres de diamètre. Dans d'autres modes de réalisation, le diamètre des perforations 331 pourra être différent. Celui-ci pourra avantageusement être compris entre 2 et 50 centimètres.

Une paroi 34 sépare les zones d'arrivée d'eau 31 et de mélange 32 d'une zone de flottation 35. Cette paroi 34 est essentiellement verticale dans sa partie inférieure et présente dans sa partie supérieure une portion inclinée 341 selon un angle α en direction de la zone de flottation 35. La valeur de cet angle α est avantageusement comprise entre 120° et 175°. La mise en oeuvre de cette portion inclinée 341 permet notamment de faciliter le passage de l'eau de la zone de mélange vers la zone de flottation.

Dans une variante de la technique présentée ici, la portion inclinée 341 peut être remplacée par une portion incurvée 342 (représentée en pointillés sur la figure 3) dont le rayon peut être compris entre 0,1 et 1 mètre.

Une telle installation de traitement d'eau selon la technique présentée ici comprend également des moyens de reprise d'eau clarifiée. Ces moyens de reprise d'eau comprennent une chambre 36 dont la face supérieure 361 est perforée sur au moins une portion de sa surface de façon à permettre à de l'eau clarifiée d'y pénétrer. Par ailleurs, la chambre 36 est reliée à une canalisation 37 qui s'étend en dehors de la zone de flottation 35 en direction d'un déversoir (non représenté), ou à tout autre moyen, qui permet de recueillir l'eau clarifiée obtenue après le traitement par flottation.

Dans une variante de la technique présentée ici, la chambre perforée 36 peut être remplacée par des tuyauteries perforées logées dans la partie inférieure de la zone de flottation 35.

Des cloisons verticales 39 s'étendent transversalement et sensiblement à la verticale dans la zone de flottation 35. La hauteur de ces cloisons 39 peut être comprise entre 30 et 300 centimètres. Ces cloisons 39 sont pleines et peuvent être disposées à intervalle régulier ou non. Elles peuvent par exemple être espacées d'une distance comprise entre 30 et 300 centimètres.

De façon préférentielle, plus les cloisons 39 sont proches de la paroi 34, plus la distance les séparant est faible. Ceci permet d'éviter l'apparition de rotations induites 102 de fluide entre deux plaques 39 comme cela apparaît sur la figure 10.

Dans d'autres modes de réalisation, les cloisons 39 pourront être perforées. Ceci présente notamment l'avantage d'améliorer la répartition de l'eau clarifiée sur toute la surface horizontale de la zone de reprise d'eau clarifiée. Par ailleurs, il peut être prévu que ces cloisons 39 soient amovibles notamment de façon à faciliter la maintenance du dispositif selon la technique présentée ici. En outre, ces cloisons 39 sont préférentiellement réalisées en acier de type inoxydable. Dans des variantes, elles pourront êtres réalisés dans des matériaux de type plastiques. Ceci peut être particulièrement avantageux lors du traitement d'eau de mer.

Dans des variantes de la technique présentée ici, les cloisons 39 pourront également présenter une portion 391 inclinée par rapport à la verticale d'un angle β dont la valeur peut être comprise entre 120 et 240° tel que cela est représenté en pointillés sur la figure 3. Elles pourront également être inclinées sur toute leur longueur. Dans une autre variante, les cloisons 39 peuvent présenter une portion incurvée 392 (représentée en pointillés) en direction de la paroi 34 ou non. La mise en oeuvre de ces portions inclinées 391 ou incurvées 392 permet d'améliorer la cassure de recirculation dans la zone de reprise d'eau clarifiée.

Par ailleurs, la zone de mélange 32 accueille au moins une buse de diffusion 40 d'une eau pressurisée, placée à proximité du panneau perforé 33.

Dans ce mode de réalisation, des buses 40 sont placées dans l'axe de chaque perforation 331 du panneau 33 comme cela est représenté sur la figure 3. Le diamètre des perforations 331 est alors préférentiellement compris entre 5 et 50 centimètres. Ceci permet d'assurer un mélange optimal entre les flux d'eau à traiter et d'eau pressurisée.

Toutefois, dans une variante de ce mode de réalisation dans laquelle les perforations 331 ménagées dans le panneau perforé 33 présente un diamètre faible, avantageusement compris entre 2 et 30 centimètres, la correspondance entre chaque buse et une perforation 331 n'est pas nécessaire comme cela est représenté sur la figure 4.

Comme il sera expliqué plus en détails par la suite, ces buses de diffusion 40 permettent de générer un courant initialement descendant d'eau pressurisée puis détendue dans la chambre de mélange 32. Dans ce cas, l'eau pressurisée est diffusée dans la chambre de mélange 32 à contre courant par rapport à l'eau à traiter.

Dans une variante de ce mode de réalisation, la ou les buses de diffusion 40 peuvent être agencées de façon à générer un courant initialement ascendant d'eau pressurisée à l'intérieur de la zone de mélange. Dans ce cas, l'eau pressurisée est diffusée dans la chambre de mélange à co-courant par rapport à l'eau traiter.

Ces buses de diffusion 40 sont connectées à des moyens de production d'eau pressurisée 42 par l'intermédiaire de tuyaux 41. Les moyens de production d'eau pressurisée 42 sont reliés à un ballon de pressurisation (non représenté) muni d'un ou de plusieurs aéroéjecteurs qui assurent le mélange air-eau. Ces moyens de production d'eau pressurisée sont reliés d'une part à la canalisation 37 dans laquelle circule l'eau clarifiée par un tube 43, et d'autre part à une source de production d'air 44. L'eau pressurisée, dont la pression est avantageusement comprise entre 3 et 8 bars, est ainsi produite à partir d'une partie de l'eau clarifiée recueillie et d'air.

Comme il sera expliqué plus en détails par la suite, plusieurs moyens de production d'eau pressurisée peuvent être mis en parallèle de façon à permettre de diffuser de l'eau pressurisée selon des débits différents.

On décrit en relation avec la figure 5 un exemple de buse de diffusion 40. Il est à noter que le principe de fonctionnement de ces buses de diffusion 40, qui consiste en une double détente, est similaire à celui des diffuseurs de type WRC. Cependant, et tel que cela apparaît plus clairement par la suite, plusieurs caractéristiques différencient les buses de diffusion 40 des diffuseurs de type WRC. Les buses de diffusion 40 sont reliées à deux arrivées d'eau pressurisées circulant à des débits Q1 et Q2 différents. Elles permettent ainsi la diffusion d'eau pressurisée selon trois débit : Q1, Q2, Q1+Q2.

Tel que cela est représenté, de telles buses de diffusion 40 présentent un corps creux principal 51 dont une extrémité est pourvue d'une première paroi perforée de détente 52 et d'une deuxième paroi perforée de détente 53 placées en regard l'une de l'autre et parallèles l'une par rapport à l'autre créant ainsi une chambre intermédiaire. Les perforations ménagées dans la première paroi de détente 52 et dans la deuxième paroi de détente 53 sont réparties sensiblement uniformément à leur surface. La densité de perforations de la première paroi de détente 52 est inférieure à la densité de perforations de la deuxième paroi de détente 53. Par ailleurs, la surface des perforations ménagées dans la première paroi de détente 52 est supérieure à la surface des perforations ménagées dans la deuxième paroi de détente 53. Les valeurs des diamètres de ces perforations sont comprises entre 1 et 15 millimètres.

Par ailleurs, l'extrémité inférieure du corps principal 51 forme un angle y par rapport à la verticale. La valeur de cet angle y est comprise entre 0 et 20°. Selon une variante de la technique présentée ici, illustrée à la figure 5 bis, la partie inférieure du corps principal 51 est incurvée. Le fait que le corps principal 51 présente une forme divergente permet de faciliter la diffusion.

Le corps principal 51 loge un corps creux secondaire 54. Ce corps creux secondaire 54 est susceptible d'être traversé par un premier flux d'eau pressurisée de débit Q1, alors que le corps creux principal 51 est susceptible d'être traversé par un deuxième flux d'eau pressurisée de débit Q2 de valeur de préférence supérieure. Ce débit Q2 peut également être de valeur inférieure dans une variante.

Dans ce mode de réalisation, chaque buse de diffusion 40 est donc reliée à deux réseaux de distribution d'eau pressurisée susceptibles de délivrer respectivement de l'eau pressurisée au débit Q1 et au débit Q2. Les moyens de production d'eau pressurisés 42 sont ainsi dédoublés (non représenté) de façon à permettre de fournir trois débits Q1, Q2 et Q1+Q2 d'eau pressurisée.

Tel que cela est représenté notamment sur les figures 3, 4, 6 et 6 bis, plusieurs rangées 45 d'une pluralité de buses de diffusion 40 peuvent être disposées en parallèle.

La figure 6 est un schéma illustrant un exemple d'architecture d'un réseau de distribution d'eau pressurisée mettant en oeuvre deux rangées 45 de buses de diffusion 40.

Un tel réseau comprend deux réseaux de distribution d'un débit Q1 d'eau pressurisée et deux réseaux de distribution d'un débit Q2 d'eau pressurisée de façon à mettre en oeuvre deux rangées de buses de diffusion.

Tel que cela est représenté, chaque buse de diffusion 40 de chaque rangée 45 est connectée au premier réseau de distribution d'un débit Q1 d'eau pressurisée au moyen du tuyau 41 et au deuxième réseau de distribution d'un débit Q2 d'eau pressurisée au moyen d'un tuyau 41'.

Une variante, illustrée à la figure 6 bis, consiste à mettre en oeuvre deux rangées de buses de diffusion 40 sans dédoubler les réseaux de distribution Q1 et Q2.

Une installation de traitement d'eau selon la technique présentée ici comprend en outre un racleur (non représenté). Comme il sera expliqué plus en détail par la suite, un tel racleur permet d'évacuer les boues, constituées de matières en suspension, matières organiques, algues initialement présentes dans l'eau brute, flottant dans la partie supérieure des zones de mélange 32 et de flottation 35, ainsi que les bulles d'air introduites dans l'ouvrage en dehors de la zone de flottation (flèche I) dans des moyens de récupération 46.

### 7.3. Exemple d'un deuxième mode de réalisation d'une installation de traitement d'eau selon la technique présentée ici

En référence aux figures 7 à 9 un second mode de réalisation d'une installation de traitement d'eau selon la technique présentée ici est décrit.

Dans ce deuxième mode de réalisation, l'installation de traitement d'eau présente un grand nombre de caractéristiques communes avec celles de l'installation selon le premier mode de réalisation décrit plus haut. Seules les différences entre le premier et le deuxième mode de réalisation seront décrites ici.

Tel que cela apparaît sur la figure 7, une plaque perforée 71, logée à l'intérieur de la zone de mélange 32 à l'aval du panneau perforé 33, est mise en oeuvre dans ce deuxième mode de réalisation. Cette plaque perforée 71 est disposée de telle sorte que les interstices 711 qui y sont ménagés font face à des parties pleines du panneau perforé 33. En d'autres termes, les interstices 711 et les perforations 331 ne sont pas alignés, de façon à constituer des chicanes, tel que cela apparaît clairement sur les figures 7 et 8.

Les interstices traversant la plaque perforée 71 peuvent présenter un diamètre compris entre 2 et 50 centimètres. Par ailleurs, le panneau perforé 33 et la plaque perforée 71 sont avantageusement séparés d'une distance comprise entre 1/3 du diamètre des interstices 711 et 3 fois le diamètre des interstices 711.

Une ou plusieurs buses de diffusion 40 peuvent être mise en oeuvre dans ce deuxième mode de réalisation. Chaque buse de diffusion 40 ne doit pas nécessairement être placée dans l'axe d'un interstice 711.

De la même façon que dans le mode de réalisation décrit précédemment, une variante de ce deuxième mode de réalisation peut consister à mettre en oeuvre plusieurs rangées 45 de buses de diffusion 40, tel que cela est représenté sur la figure 8.

Les buses de diffusion mises oeuvre dans ce deuxième mode de réalisation peuvent être similaires aux buses de diffusion 40 décrites précédemment en relation avec les figures 5 et 6.

Dans une variante de ce deuxième mode de réalisation, illustrée à la figure 9, les buses de diffusion sont différentes des buses de diffusion 40 décrites précédemment en ce que chacune d'entre-elles n'est pas connectée au premier réseau de diffusion d'une eau pressurisée à un débit Q1 et au deuxième réseau de diffusion d'une eau pressurisée à un débit Q2. Au contraire, les buses de diffusion mises en oeuvre dans cette variante du deuxième mode de réalisation sont réparties en deux catégories :
- des buses de diffusion 91 d'une première catégorie sont chacune reliées au réseau de diffusion d'une eau pressurisée à un débit Q1 ;
- des buses de diffusion 92 d'une deuxième catégorie sont chacune reliées au réseau de diffusion d'une eau pressurisée à un débit Q2.

Ces buses de diffusion 91 et 92 peuvent par exemple être de type WRC ou tout autre type en conformité avec le principe de bullage.

Dans une autre variante, les buses 40 sont toutes identiques et diffusent un unique débit.

Dans une variante de ce mode de réalisation illustrée par la figure 8 bis, la plaque perforée peut présenter deux types d'interstices : des interstices de base et des interstices d'affinage 712.

Les interstices de base sont constitués par les interstices 711 ménagés de façon que la plaque perforée 71 constitue un brise-jet. Les interstices d'affinage 712 sont ménagés dans les parties pleines joignant des interstices de base 711 de la plaque perforée 71. La mise en oeuvre de ces interstices d'affinage 712 permet d'optimiser l'homogénéisation du flux d'eau à traiter entrant dans la zone de mélange 32.

Les diamètres des interstices de bases 711 et des interstices d'affinage 712 sont choisis de façon que le débit traversant les interstices de base 711 est égal au débit traversant les interstices d'affinage 712.

### 7.4. Procédé de traitement d'eau par flottation selon la technique présentée ici

Un procédé de traitement d'eau par flottation selon la technique présentée ici va maintenant être décrit.

Un tel procédé consiste à faire transiter de l'eau à traiter dans une installation de traitement d'eau selon l'un ou l'autre des modes de réalisation décrits plus haut.

L'eau à traiter préalablement coagulée et floculée est dirigée vers la zone d'arrivée d'eau 31. L'eau à traiter est ensuite injectée selon un courant ascendant dans la zone de mélange 32 en passant à travers les perforations 331 du panneau perforé 33.

Dans le même temps, de l'eau pressurisée puis détendue est injectée dans la zone de mélange 32, à contre courant du courant ascendant de l'eau à traiter, au moyens des buses de diffusion 40. Comme il a été indiqué précédemment, il peut être prévu que l'eau pressurisée soit injectée dans la zone de mélange à co-courant.

L'eau pressurisée est obtenue, après activation des moyens de production d'eau pressurisée 42, à partir d'une portion de l'eau clarifiée qui est évacuée de la zone de flottation 35 et d'air provenant de la source d'air 44.

L'eau pressurisée circule dans la canalisation 41 jusqu'aux buses de diffusion 40. Elle traverse tout d'abord la première paroi de détente 52. L'eau pressurisée subit alors une forte perte de pression et se détend. L'eau pressurisée puis détendue traverse ensuite la deuxième paroi de détente 53 et subit une faible perte de pression permettant sa diffusion. Ce phénomène de diffusion contribue à éviter les forts gradients de vitesse au niveau de l'étage de diffusion.

La diffusion de l'eau pressurisée puis détendue dans la zone de mélange 32 s'accompagne de la formation de micro bulles d'air réparties de façon homogène sur toute la section horizontale de la zone de mélange 32.

Le fait que l'eau à traiter soit injectée dans la zone de mélange 32 en traversant le panneau perforé 33 permet d'homogénéiser et de fragmenter son écoulement en évitant la formation de courts-circuits, de zones de recirculation et de zone mortes. En d'autres termes, la mise en oeuvre du panneau perforé 33 permet d'assurer une mise en contact homogène et sur toute la section horizontale de la zone de mélange 32 de l'eau à traiter et des micro bulles d'air.

L'homogénéisation de la mise en contact de l'eau à traiter et des micro bulles d'air peut encore être améliorer lorsque la plaque trouée 71 est interposée entre le panneau perforé 33 et les buses de diffusion.

Ainsi, la combinaison de l'homogénéisation du flux d'eau à traiter, de part la présence du panneau perforé, avec l'agencement des buses de diffusion en regard de chaque perforation du panneau perforé, et/ou avec la mise en oeuvre de la plaque perforée formant brise-jet, permet d'assurer un mélange optimal entre l'eau à traiter et l'eau pressurisée.

Les micro bulles d'air ont pour fonction de ramener vers la surface de la zone de mélange 32 et de la zone de flottation 35 toutes les particules en suspension dans l'eau à traiter. Ainsi, le fait que le contact entre l'eau à traiter et les micro bulles d'air soit homogène permet d'optimiser la clarification de l'eau à traiter et d'améliorer considérablement l'efficacité du traitement de l'eau par flottation.

Le mélange constitué des micro bulles d'air sur lesquelles sont agglomérées les particules qui étaient initialement en suspension dans l'eau à traiter se déplace ensuite vers la partie supérieure de la zone de flottation 35 comme cela est représenté par la flèche J. Ce mélange peut ensuite être évacué en dehors de la zone de flottation 35 au moyen du racleur (non représenté) qui permet de racler la surface de la zone de flottation 35 afin de diriger les boues produites ainsi que bulles d'air en direction des moyens de récupération 46 comme cela est représenté par la flèche I.

L'eau clarifiée s'écoule alors en direction de la partie inférieure de la zone de flottation 35 qui accueille la chambre 36 et rencontre les cloisons 39. L'écoulement de l'eau clarifiée est fragmenté par ces cloisons 39.

La mise en oeuvre de ces cloisons 39, du fait qu'elles permettent de fragmenter l'écoulement de l'eau clarifiée à l'intérieur de la zone de flottation 35, permet d'éviter l'apparition de boucle de recirculation à proximité de la zone de reprise de l'eau clarifiée.

Ceci apparaît clairement sur la figure 10 qui illustre les vecteurs vitesse du flux de liquide 101 à l'intérieur de la zone de flottation 35.

Une comparaison des figures 2 et 10, qui illustrent respectivement les vecteurs vitesse du liquide à l'intérieur d'une zone de flottation d'une installation selon l'art antérieur et d'une installation selon la technique présentée ici, permet de mieux appréhender les modifications de flux de liquide auxquelles conduit la mise en oeuvre des cloisons 39 dans la zone de flottation 35.

Il apparaît clairement sur la figure 2 que les vecteurs vitesse 21 se concentrent en un tourbillon au centre de la zone de flottation. Ce tourbillon crée un phénomène de boucle de recirculation et dirige l'eau clarifiée en direction de la partie supérieure de la zone de flottation, partie dans laquelle elle se mélange avec le lit de micro bulles.

Par opposition, il apparaît clairement sur la figure 10 que les vecteurs vitesse du liquide se brisent sur les des cloisons 39 et que les vecteurs vitesse se trouvant entre ces cloisons 39 ne sont pas perturbés, c'est-à-dire qu'ils ne remontent pas en direction de la partie supérieure de la zone de flottation.

La mise en oeuvre de telles cloisons 39 permet ainsi d'éviter le phénomène de boucle de recirculation en partie inférieure de la zone de flottation, là où se trouve la chambre 36 permettant la reprise de l'eau clarifiée, et donc de prévenir, ou à tout le moins de limiter, le départ de micro bulles d'air avec l'eau clarifiée.

La mise en oeuvre des cloisons 39 permet de prévenir le départ de bulles et de boues vers la reprise d'eau clarifiée et donc d'éviter que l'eau clarifiée recueillie ne soit souillée par des micro bulles d'air chargées de particules.

La technique selon l'invention permet donc d'optimiser la clarification de l'eau par flottation et d'améliorer la qualité de l'eau clarifiée recueillie en fin de traitement de flottation.

Par ailleurs, le procédé selon l'invention peut également comprendre une étape consistant à choisir la valeur du débit d'eau pressurisée injecté dans la zone de mélange. Le choix de la valeur du débit d'eau pressurisée peut être lié au débit de l'eau à traiter et/ou à la qualité de l'eau à traiter. En effet, si le débit de l'eau à traiter varie dans des proportions de 1 à 4, et/ou si la qualité de l'eau à traiter change, il est intéressant, notamment sur un plan économique, de pouvoir faire varier dans les mêmes proportions le débit de l'eau pressurisée.

Ainsi, lorsque le débit d'eau à traiter est assez faible et/ou que la qualité de l'eau à traiter est relativement bonne, les moyens de production d'eau pressurisée selon le débit Q1 seront activés.

Lorsque le débit de l'eau à traiter augmente et/ou lorsque la qualité de l'eau à traiter se dégrade, les moyens de production d'eau pressurisée selon le débit Q2 seront activés, ou bien l'ensemble des moyens de production pourra être mis en oeuvre de façon à fournir un débit égal à la somme de Q1 et Q2.

## Revendications

1. Installation de traitement d'eau par flottation comprenant au moins :
une zone d'arrivée d'eau à traiter (31) préalablement coagulée et floculée ;
une zone de mélange (32) d'une eau pressurisée puis détendue avec ladite eau à traiter ;
une zone de flottation (35) séparée de ladite zone de mélange (32) par une paroi (34) ;
une zone de reprise d'eau clarifiée (36) prévue dans la partie inférieure de ladite zone de flottation (35) ;
**caractérisée en ce que** ladite zone de mélange (32) accueille au moins une buse de diffusion (40, 91, 92) de ladite eau pressurisée, ladite buse de diffusion (40, 91, 92) s'étendant au voisinage d'un panneau (33), dont au moins une partie présente des perforations (331), et qui sépare ladite zone d'arrivée (31) et ladite zone de mélange (32), **en ce que** ledit panneau (33) s'étend sensiblement horizontalement, verticalement ou inclinée, et **en ce que** les perforations s'étendent sur toute la surface du panneau perforé, lesdites perforations (331) permettant le passage de l'eau à traiter (31) et ledit panneau perforé permettant d'homogénéiser et de fragmenter l'écoulement de l'eau à traiter (31).

2. Installation de traitement d'eau selon l'une quelconque des revendications 1, **caractérisée en ce qu'**une plaque formant brise jet (71) sensiblement parallèle audit panneau (33), et dont au moins une partie présente des premiers trous (711), s'étend entre ledit panneau (33) et ladite buse (40 ,91, 92).

3. Installation de traitement selon la revendication 2, **caractérisée en ce que** lesdits premiers trous (711) de ladite plaque (71) s'étendent dans le prolongement de parties pleines dudit panneau (33).

4. Installation de traitement d'eau selon la revendication 3, **caractérisée en ce que** ladite plaque formant brise jet (71) présente des seconds trous (712) qui s'étendent dans le prolongement desdites perforations (331) dudit panneau (33).

5. Installation de traitement d'eau selon l'une quelconque des revendications 1 à 4, **caractérisée en ce que** chacune desdites buses de diffusion est placée essentiellement dans l'axe d'une desdites perforations (331) dudit panneau (33).

6. Installation de traitement d'eau selon l'une quelconque des revendications 1 à 5, **caractérisée en ce qu'**elle comprend un premier (41) et un deuxième (41') réseau de distribution de ladite eau pressurisée respectivement selon deux valeurs de débit de distribution différentes.

7. Installation de traitement d'eau selon la revendication 6, **caractérisée en ce que** ladite buse (40, 91, 92) est reliée auxdits premier (41) et deuxième (41') réseaux de distribution.

8. Installation de traitement d'eau selon la revendication 6, **caractérisée en ce qu'**elle comprend au moins deux dites buses (91, 92) et **en ce que** lesdites buses (91, 92) appartiennent à deux catégories de buses, une première catégorie de buses étant reliée audit premier réseau (41) et une deuxième catégorie de buses étant reliée audit deuxième réseau (41').

9. Installation de traitement d'eau selon l'une quelconque des revendications 1 à 8, **caractérisée en ce que** ladite ou lesdites buses (40, 91, 92) comprennent deux plaques perforées disposées en regard l'une de l'autre.

10. Installation de traitement d'eau selon l'une quelconque des revendications 1 à 9, **caractérisée en ce que** lesdites buses (40, 91, 92) présentent un contour inférieur divergent.

11. Installation de traitement d'eau selon la revendication 10, **caractérisée en ce que** ledit contour divergent est plan et forme un angle γ avec la verticale compris entre 0° et 20°.

12. Installation de traitement d'eau selon la revendication 10, **caractérisée en ce que** ledit contour divergent est incurvé.

13. Installation de traitement d'eau selon l'une quelconque des revendications 1 à 12, **caractérisée en ce que** la partie supérieure de ladite paroi (34) séparant ladite zone de mélange (32) de ladite zone de flottation (35) présente une portion inclinée (341) selon un angle α en direction de ladite zone de flottation (35).

14. Installation de traitement d'eau selon la revendication 13, **caractérisée en ce que** la valeur dudit angle α est comprise entre 120° et 175°.

15. Installation de traitement d'eau selon l'une quelconque des revendications 1 à 14, **caractérisée en ce que** ladite paroi (34) séparant ladite zone de mélange (32) de ladite zone de flottation (35) présente une portion supérieure incurvée (342) en direction de ladite zone de flottation (35).

16. Installation de traitement d'eau selon la revendication 15, **caractérisée en ce que** ladite portion incurvée (342) présente un rayon compris entre 0,1 et 1 mètre.

17. Installation de traitement d'eau selon l'une quelconque des revendications 1 à 16, **caractérisée en ce que** ladite zone de flottation (35) accueille une pluralité de cloisons (39) s'étendant essentiellement verticalement au-dessus de ladite zone de reprise (36).

18. Installation de traitement d'eau selon la revendication 17, **caractérisée en ce que** au moins une desdites cloisons (39) présente au moins une partie supérieure inclinée (931) selon un angle β ou incurvée (392).

19. Installation de traitement d'eau selon la revendication 18, **caractérisée en ce que** ledit angle β a une valeur comprise entre 120° et 240°.

20. Installation de traitement d'eau selon l'une quelconque des revendications 17 à 19, **caractérisée en ce que** lesdites cloisons (39) ont une hauteur comprise entre 30 et 300 centimètres.

21. Installation de traitement d'eau selon l'une quelconque des revendications 17 à 20, **caractérisée en ce que** lesdites cloisons (39) sont plus rapprochées les unes des autres à proximité de ladite paroi (34) séparant ladite zone de mélange (32) de ladite zone de flottation (35).

22. Installation de traitement d'eau selon l'une quelconque des revendications 17 à 21, **caractérisée en ce que** lesdites cloisons (39) sont séparées d'une distance comprise entre 20 et 300 centimètres.

23. Installation de traitement d'eau selon l'une quelconque des revendications 1 à 22, **caractérisée en ce que** ladite zone de reprise accueille des moyens de reprise d'eau clarifiée (36) reliés à des moyens de recueil d'eau clarifiée.

24. Installation de traitement d'eau selon l'une quelconque des revendications 1 à 23, **caractérisée en ce qu'**elle comprend des moyens de production (42) de ladite eau pressurisée.

25. Installation de traitement d'eau selon la revendication 24, **caractérisée en ce que** lesdits moyens de production (42) sont reliés auxdits moyens de reprise d'eau clarifiée (36) et à une source de production d'air (44).

26. Installation de traitement d'eau selon l'une quelconque des revendications 1 à 25, **caractérisée en ce qu'**elle comprend des moyens de raclage susceptibles d'être déplacés en regard de la partie supérieure de ladite zone de flottation (35).

27. Procédé de traitement d'eau par flottation, **caractérisé en ce qu'**il consiste à faire transiter l'eau dans une installation selon l'une quelconque des revendications 1 à 26, et à admettre dans ladite zone de mélange (32) un courant ascendant de ladite eau à traiter à travers ledit panneau perforé (33), et un courant de ladite eau pressurisée au moyen de ladite ou desdites buses de diffusion (40, 91, 92) de façon à former des bulles d'air susceptibles de ramener des particules en suspension dans ladite eau à traiter vers la surface de ladite zone de mélange (32).

28. Procédé de traitement d'eau par flottation selon la revendication 27, **caractérisé en ce que** ledit courant de ladite eau pressurisée est initialement ascendant.

29. Procédé de traitement d'eau par flottation selon la revendication 27, **caractérisé en ce que** ledit courant de ladite eau pressurisée est initialement descendant.

30. Procédé de traitement d'eau par flottation selon la revendication 27, **caractérisé en ce que** ledit courant de ladite eau pressurisée est initialement horizontal.

31. Procédé de traitement d'eau par flottation, selon l'une quelconque des revendications 27 à 30, **caractérisé en ce qu'**il comprend une étape de choix d'une desdites valeurs dudit débit de distribution de ladite eau pressurisée en fonction du débit de ladite eau à traiter et/ou de la qualité de ladite eau à traiter.

32. Procédé de traitement d'eau par flottation selon l'une quelconque des revendications 27 à 31, **caractérisé en ce qu'**il consiste à mettre en oeuvre lesdits moyens de raclage afin d'évacuer en dehors de ladite zone de flottation (35) lesdites particules agglomérées auxdites bulles d'air.

## Patentansprüche

1. Flotationswasserbehandlungsanlage, umfassend mindestens:
eine Ankunftszone (31) des zu behandelnden Wassers, das zuvor koaguliert und ausgeflockt wurde;
eine Mischzone (32) eines Wassers, das unter Druck gesetzt und dann entspannt wurde, mit dem zu behandelnden Wasser;
eine Flotationszone (35), die von der Mischzone (32) durch eine Wand (34) getrennt ist;
eine Aufnahmezone (36) von geklärtem Wasser, die in dem unteren Teil der Flotationszone (35) vorgesehen ist;
**dadurch gekennzeichnet, dass** die Mischzone (32) mindestens eine Diffusionsdüse (40, 91, 92) des unter Druck gesetzten Wassers aufnimmt, wobei sich die Diffusionsdüse (40, 91, 92) in der Nähe eines Paneels (33) erstreckt, von dem mindestens ein Teil Perforationen (331) aufweist, und das die Ankunftszone (31) und die Mischzone (32) trennt, dadurch, dass sich das Paneel (33) im Wesentlichen horizontal, vertikal oder geneigt erstreckt, und dadurch, dass sich die Perforationen über die gesamte Fläche des perforierten Paneels erstrecken, wobei die Perforationen (331) den Durchgang von zu behandelndem Wasser (31) gestatten, und das perforierte Paneel die Homogenisierung und Fragmentierung des zu behandelnden Wasserabflusses (31) gestattet.

2. Wasserbehandlungsanlage nach einem der Ansprüche 1,
**dadurch gekennzeichnet, dass** sich eine Platte, die einen Strahlverteiler (71) bildet, im Wesentlichen parallel zu dem Paneel (33), und von der mindestens ein Teil erste Löcher (711) aufweist, zwischen dem Paneel (33) und der Düse (40, 91, 92) erstreckt.

3. Wasserbehandlungsanlage nach Anspruch 2,
**dadurch gekennzeichnet, dass** sich die ersten Löcher (711) der Platte (71) in die Verlängerung der durchgehenden Teile des Paneels (33) erstrecken.

4. Wasserbehandlungsanlage nach Anspruch 3,
**dadurch gekennzeichnet, dass** die Platte, die einen Strahlverteiler (71) bildet, zweite Löcher (712) aufweist, die sich in die Verlängerung der Perforationen (331) des Paneels (33) erstrecken.

5. Wasserbehandlungsanlage nach einem der Ansprüche 1 bis 4,
**dadurch gekennzeichnet, dass** jede der Diffusionsdüsen im Wesentlichen in der Achse einer der Perforationen (331) des Paneels (33) platziert ist.

6. Wasserbehandlungsanlage nach einem der Ansprüche 1 bis 5,
**dadurch gekennzeichnet, dass** diese ein erstes (41) und ein zweites (41') Verteilungsnetz des unter Druck gesetzten Wassers jeweils gemäß zwei verschiedenen Verteilungsdurchsatzwerten umfasst.

7. Wasserbehandlungsanlage nach Anspruch 6,
**dadurch gekennzeichnet, dass** die Düse (40, 91, 92) mit dem ersten (41) und zweiten (41') Verteilungsnetz verbunden ist.

8. Wasserbehandlungsanlage nach Anspruch 6,
**dadurch gekennzeichnet, dass** diese mindestens zwei der genannten Düsen (91, 92) umfasst, und dadurch, dass die Düsen (91, 92) zu zwei Kategorien von Düsen gehören, wobei eine erste Kategorie der Düsen mit dem ersten Netz (41) verbunden ist, und eine zweite Kategorie der Düsen mit dem zweiten Netz (41') verbunden ist.

9. Wasserbehandlungsanlage nach einem der Ansprüche 1 bis 8,
**dadurch gekennzeichnet, dass** die Düse oder Düsen (40, 91, 92) zwei perforierte Platten umfasst oder umfassen, die einander gegenüber angeordnet sind.

10. Wasserbehandlungsanlage nach einem der Ansprüche 1 bis 9,
**dadurch gekennzeichnet, dass** die Düsen (40, 91, 92) eine divergierende untere Kontur aufweisen.

11. Wasserbehandlungsanlage nach Anspruch 10,
**dadurch gekennzeichnet, dass** die divergierende Kontur eben ist und einen Winkel γ mit der Vertikalen zwischen 0° und 20° bildet.

12. Wasserbehandlungsanlage nach Anspruch 10,
**dadurch gekennzeichnet, dass** die divergierende Kontur gekrümmt ist.

13. Wasserbehandlungsanlage nach einem der Ansprüche 1 bis 12,
**dadurch gekennzeichnet, dass** der obere Teil der Wand (34), welche die Mischzone (32) von der Flotationszone (35) trennt, einen geneigten Abschnitt (341) unter einem Winkel α in der Richtung der Flotationszone (35) aufweist.

14. Wasserbehandlungsanlage nach Anspruch 13,
**dadurch gekennzeichnet, dass** der Wert des Winkels α zwischen 120° und 175° beträgt.

15. Wasserbehandlungsanlage nach einem der Ansprüche 1 bis 14,
**dadurch gekennzeichnet, dass** die Wand (34), welche die Mischzone (32) von der Flotationszone (35) trennt, einen gekrümmten oberen Abschnitt (342) in der Richtung der Flotationszone (35) aufweist.

16. Wasserbehandlungsanlage nach Anspruch 15,
**dadurch gekennzeichnet, dass** der gekrümmte Abschnitt (342) einen Radius zwischen 0,1 und 1 Meter aufweist.

17. Wasserbehandlungsanlage nach einem der Ansprüche 1 bis 16,
**dadurch gekennzeichnet, dass** die Flotationszone (35) eine Vielzahl von Trennwänden (39) aufnimmt, die sich im Wesentlichen vertikal über der Aufnahmezone (36) erstrecken.

18. Wasserbehandlungsanlage nach Anspruch 17,
**dadurch gekennzeichnet, dass** mindestens eine der Trennwände (39) mindestens einen oberen Teil aufweist, der unter einem Winkel β geneigt (931) oder gekrümmt (932) ist.

19. Wasserbehandlungsanlage nach Anspruch 18,
**dadurch gekennzeichnet, dass** der Winkel β einen Wert zwischen 120° und 240° hat.

20. Wasserbehandlungsanlage nach einem der Ansprüche 17 bis 19,
**dadurch gekennzeichnet, dass** die Trennwände (39) eine Höhe zwischen 30 und 300 Zentimeter aufweisen.

21. Wasserbehandlungsanlage nach einem der Ansprüche 17 bis 20,
**dadurch gekennzeichnet, dass** die Trennwände (39) in der Nähe der Wand (34), welche die Mischzone (32) von der Flotationszone (35) trennt, einander näher sind.

22. Wasserbehandlungsanlage nach einem der Ansprüche 17 bis 21,
**dadurch gekennzeichnet, dass** die Trennwände (39) in einem Abstand zwischen 20 und 300 Zentimeter getrennt sind.

23. Wasserbehandlungsanlage nach einem der Ansprüche 1 bis 22,
**dadurch gekennzeichnet, dass** die Aufnahmezone Mittel (36) zum Aufnehmen von geklärtem Wasser aufnimmt, die mit Mitteln zum Sammeln von geklärtem Wasser verbunden sind.

24. Wasserbehandlungsanlage nach einem der Ansprüche 1 bis 23,
**dadurch gekennzeichnet, dass** diese Mittel (42) zum Erzeugen des unter Druck gesetzten Wassers umfasst.

25. Wasserbehandlungsanlage nach Anspruch 24,
**dadurch gekennzeichnet, dass** die Erzeugungsmittel (42) mit den Mitteln (36) zum Aufnehmen von geklärtem Wasser und mit einer Lufterzeugungsquelle (44) verbunden sind.

26. Wasserbehandlungsanlage nach einem der Ansprüche 1 bis 25,
**dadurch gekennzeichnet, dass** diese Abstreifmittel umfasst, die gegenüber dem oberen Teil der Flotationszone (35) verschoben werden können.

27. Flotationswasserbehandlungsverfahren,
**dadurch gekennzeichnet, dass** dieses daraus besteht, Wasser in eine Anlage nach einem der Ansprüche 1 bis 26 einzubringen, und in der Mischzone (32) einen aufsteigenden Strom des zu behandelnden Wassers quer durch ein perforiertes Paneel (33) und einen Strom des unter Druck gesetzten Wassers durch die Diffusionsdüse oder Diffusionsdüsen (40, 91, 92) aufzunehmen, um Luftblasen zu bilden, die Partikel in Suspension in dem zu behandelnden Wasser zur Oberfläche der Mischzone (32) zurückführen können.

28. Flotationswasserbehandlungsverfahren nach Anspruch 27,
**dadurch gekennzeichnet, dass** der Strom des unter Druck gesetzten Wassers anfänglich aufsteigend ist.

29. Flotationswasserbehandlungsverfahren nach Anspruch 27,
**dadurch gekennzeichnet, dass** der Strom des unter Druck gesetzten Wassers anfänglich absteigend ist.

30. Flotationswasserbehandlungsverfahren nach Anspruch 27,
**dadurch gekennzeichnet, dass** der Strom des unter Druck gesetzten Wassers anfänglich horizontal ist.

31. Flotationswasserbehandlungsverfahren nach einem der Ansprüche 27 bis 30,
**dadurch gekennzeichnet, dass** dieses einen Schritt des Auswählens eines der Wert des Verteilungsdurchsatzes des unter Druck gesetzten Wasser als Funktion des Durchsatzes des zu behandelnden Wassers und/oder der Menge des zu behandelnden Wassers umfasst.

32. Flotationswasserbehandlungsverfahren nach einem der Ansprüche 27 bis 31,
**dadurch gekennzeichnet, dass** dieses daraus besteht, die Abstreifmittel einzusetzen, um die an den Luftblasen agglomerierten Partikel aus der Flotationszone (35) zu evakuieren.

## Claims

1. Installation for water treatment by flotation comprising at least:
- one inlet zone of water to be treated (31) which is coagulated and flocculated beforehand;
- one mixing zone (32) of a pressurised and then depressurised water with said water to be treated;
- one flotation zone (35) separated from said mixing zone (32) by a wall (34);
- one clarified-water take-up zone (36) provided in the lower part of said flotation zone (35);
**characterised in that** said mixing zone (32) accommodates at least one spray nozzle (40, 91, 92) of said pressurised water, said spray nozzle (40, 91, 92) extending in the vicinity of a panel (33), of which at least one portion has perforations (331), and which separates said inlet zone (31) and said mixing zone (32) ;
**in that** said panel (33) extends substantially horizontally, vertically or inclined, and **in that** the perforations extend over the entire surface of the perforated panel (33);
said perforations (33) allowing the passage of the water to be treated (31) and said perforated panel allowing the homogenisation and the fragmentation of the flow of the water to be treated (31).

2. Water treatment installation according to claim 1, **characterised in that** a plate forming a splash board (71) substantially parallel to said panel (33), and of which at least one portion has first holes (711), extends between said panel (33) and said nozzle (40, 91, 92) .

3. Treatment installation set forth in claim 2, **characterised in that** said first holes (711) of said plate (71) extend in the extension of solid parts of said panel (33).

4. Water treatment installation set forth in claim 3, **characterised in that** said plate forming a splash board (71) has second holes (712) which extend in the extension of said perforations (331) of said panel (33).

5. Water treatment installation according to any of claims 1 to 4, **characterised in that** each of said spray nozzles is placed substantially in the axis of one of said perforations (331) of said panel (33).

6. Water treatment installation according to any of claims 1 to 5, **characterised in that** it comprises a first (41) and a second (41') distribution network of said pressurised water respectively according to two different distribution flow rate values.

7. Water treatment installation set forth in claim 6, **characterised in that** said nozzle (40, 91, 92) is connected to said first (41) and second (41') distribution networks.

8. Water treatment installation set forth in claim 6, **characterised in that** it comprises at least two said nozzles (91, 92) and **in that** said nozzles (91,92) belong to two categories of nozzles, a first category of nozzles being connected to said first network (41) and a second category of nozzles being connected to said second network (41').

9. Water treatment installation according to any of claims 1 to 8, **characterised in that** said nozzle(s) (40, 91, 92) include two perforated plates arranged across from one another.

10. Water treatment installation according to any of claims 1 to 9, **characterised in that** said nozzles (40, 91, 92) have a lower divergent outline.

11. Water treatment installation set forth in claim 10, **characterised in that** said divergent outline is flat and forms an angle γ with the vertical between 0° and 20°.

12. Water treatment installation set forth in claim 10, **characterised in that** said divergent outline is curved.

13. Water treatment installation according to any of claims 1 to 12, **characterised in that** the upper part of said wall (34) separating said mixing zone (32) from said flotation zone (35) has a portion inclined (341) according to an angle α in the direction of said flotation zone (35).

14. Water treatment installation set forth in claim 13, **characterised in that** the value of said angle α is between 120° and 175°.

15. Water treatment installation according to any of claims 1 to 14, **characterised in that** said wall (34) separating said mixing zone (32) from said flotation zone (35) has an upper portion curved (342) in the direction of said flotation zone (35).

16. Water treatment installation set forth in claim 15, **characterised in that** said curved portion (342) has a radius between 0.1 and 1 metre.

17. Water treatment installation according to any of claims 1 to 16, **characterised in that** said flotation zone (35) accommodates a plurality of partitions (39) extending substantially vertically above said take-up zone (36).

18. Water treatment installation set forth in claim 17, **characterised in that** at least one of said partitions (39) has at least one upper part inclined (931) according to an angle β or curved (392).

19. Water treatment installation set forth in claim 18, **characterised in that** said angle β has a value between 120° and 240°.

20. Water treatment installation according to any of claims 17 to 19, **characterised in that** said partitions (39) have a height between 30 and 300 centimetres.

21. Water treatment installation according to any of claims 17 to 20, **characterised in that** said partitions (39) are closer to one another in the vicinity of said wall (34) separating said mixing zone (32) from said flotation zone (35).

22. Water treatment installation according to any of claims 17 to 22, **characterised in that** said partitions (39) are separated by a distance between 20 and 300 centimetres.

23. Water treatment installation according to any of claims 1 to 22, **characterised in that** said take-up zone accommodates means for taking up clarified water (36) connected to means of collecting clarified water.

24. Water treatment installation according to any of claims 1 to 23, **characterised in that** it comprises means for producing (42) said pressurised water.

25. Water treatment installation set forth in claim 24, **characterised in that** said means for producing (42) are connected to said means for taking up clarified water (36) and to a source of air production (44).

26. Water treatment installation according to any of claims 1 to 25, **characterised in that** it comprises means for scraping able to be displaced across from the upper part of said flotation zone (35).

27. Water treatment method by flotation, **characterised in that** it consists in transiting the water in an installation according to any of claims 1 to 26, and in admitting into said mixing zone (32) an ascending current of said water to be treated through said perforated panel (33), and a current of said pressurised water by means of said spray nozzle(s) (40, 91, 92) in such a way to form air bubbles able to bring particles in suspension in said water to be treated towards the surface of said mixing zone (32).

28. Water treatment method by flotation set forth in claim 27, **characterised in that** said current of said pressurised water is initially ascending.

29. Water treatment method by flotation set forth in claim 27, **characterised in that** said current of said pressurised water is initially descending.

30. Water treatment method by flotation set forth in claim 27, **characterised in that** said current of said pressurised water is initially horizontal.

31. Water treatment method by flotation, according to any of claims 27 to 30, **characterised in that** it comprises a step of choosing one of said values of said distribution flow rate of said pressurised water according to the flow rate of said water to be treated and/or or the quality of said water to be treated.

32. Water treatment method by flotation according to any of claims 27 to 31, **characterised in that** it consists in implementing said means for scraping so as to remove outside of said flotation zone (35) said particles agglomerated to said air bubbles.
